## Europäisches Patentamt
## European Patent Office
## Office européen des brevets

(19)

(11) Veröffentlichungsnummer: **0 016 448**
**B1**

(12) **EUROPÄISCHE PATENTSCHRIFT**

(45) Veröffentlichungstag der Patentschrift:
**04.08.82**

(21) Anmeldenummer: **80101374.9**

(22) Anmeldetag: **17.03.80**

(51) Int. Cl.³: **C 08 F 238/02,** C 08 F 4/60 //
(C08F238/02, 238/00)

(54) Verfahren zur Herstellung von Copolymerisaten des Acetylens.

(30) Priorität: **19.03.79 DE 2910674**

(43) Veröffentlichungstag der Anmeldung:
**01.10.80 Patentblatt 80/20**

(45) Bekanntmachung des Hinweises auf die Patenterteilung:
**04.08.82 Patentblatt 82/31**

(84) Benannte Vertragsstaaten:
**CH DE FR GB NL**

(56) Entgegenhaltungen:
**FR-A-1 149 218**
**US-A-4 020 265**
**US-A-4 108 942**

(73) Patentinhaber: **BASF Aktiengesellschaft,**
**Carl-Bosch-Strasse 38, D-6700 Ludwigshafen (DE)**

(72) Erfinder: **Wegner, Gerhard, Dr., Hinterhofstrasse 46,**
**D-7809 Denzlingen (DE)**
Erfinder: **Mueller, Wolfgang, Giessenstrasse 3,**
**D-7800 Freiburg (DE)**

BUNDESDRUCKEREI BERLIN

## Verfahren zur Herstellung von Copolymerisaten des Acetylens

Die Erfindung betrifft die Herstellung von Copolymerisaten des Acetylens, wobei man Gemische aus Acetylen und anderen Monoalkinen mit Ziegler-Katalysatoren polymerisiert.

Die Herstellung von Polyacetylenen durch Polymerisation von Acetylen ist bekannt. Sie ist z. B. in den Arbeiten von Hatano in J. Chem. Soc. Japan, Ind. Chem. Sed. (1962) 65, Seite 723 und folgende sowie von D. J. Berets et al. (Trans. Farad. Soc. 64, [1968], Seite 823 folgende). Auch in neueren Publikationen von H. Shirakawa et al. (J. Chem. Soc. Chem. Comm., S. 578 [1977]) ist die Polymerisation von Acetylen zu Polyacetylenen mit Hilfe von Ziegler-Katalysatoren beschrieben. Nach den genannten Methoden werden Produkte erhalten, die in den üblichen Lösungsmitteln vollkommen unlöslich sind und als schwarze amorphe bis teilkristalline Materialien anfallen.

Der Erfindung liegt die Aufgabe zugrunde, ein Verfahren zur Herstellung von Copolymerisaten des Acetylens zu schaffen.

Die Aufgabenstellung der Erfindung wird durch ein Verfahren gelöst, bei dem man Gemische aus Acetylen und anderen Monoalkinen polymerisiert.

Gegenstand der Erfindung ist daher ein Verfahren zur Herstellung von Copolymerisaten des Acetylens durch katalytische Polymerisation von Acetylen mit Ziegler-Katalysatoren. Das Verfahren ist dadurch gekennzeichnet, daß man Gemische aus Acetylen und anderen Monoalkinen polymerisiert.

Als Comonomere für das Acetylen kommen z. B. in Frage: Propin, Butin, Pentin, Hexin, Heptin, Octin oder z. B. Decin, aber auch Phenylacetylen. Am zweckmäßigsten verwendet man Monomermischungen, die bis zu 40 Mol-% andere Monoalkine, vorzugsweise zwischen 5 und 20 Mol-% Aline enthalten.

Die Durchführung der Polymerisation wird am zweckmäßigsten mit Ziegler-Katalysatoren vorgenommen, die durch Mischungen aus Aluminiumtrialkylen und Titantetraoxialkylen hergestellt werden. Von den Aluminiumtrialkylen eignen sich z. B. Aluminiumtriäthyl sowie Aluminiumtriisobutyl. Bevorzugt ist das Aluminiumtrioctyl.

Von den Titantetraoxialkylen sind solche zweckmäßig, deren Alkylreste 1 bis 10 C-Atome enthalten, insbesondere hat sich das Titantetraoxibutyl als geeignet erwiesen. Das Mischungsverhältnis aus Aluminiumtrialkyl und Titantetraoxialkyl liegt zwischen 0,5 : 1 und 1 : 0,5, vorzugsweise um 1 : 1, jeweils bezogen auf Gewichtsteile.

Die Katalysatormischung wird in Mengen von 0,1 bis 10 Teilen bezogen auf 100 Teile des Gemisches aus Acetylen und anderen Alkinen eingesetzt. Die Polymerisationstemperatur liegt zweckmäßig zwischen −90 und +100°C, vorzugsweise zwischen −70 und +10°C. Die Polymerisation erfolgt zweckmäßig bei 0,1 bis 10 bar, vorzugsweise um 1 bar.

Die Polymerisation kann z. B. in Hilfsflüssigkeiten vorgenommen werden. Als solche eignen sich gegenüber den Polymerisationskatalysatoren und den Monomeren indifferente Flüssigkeiten, wie aliphatische Öle, Aromaten, Cycloaliphaten aber auch Petroläther sowie Ligroin. Die Hilfsflüssigkeiten werden im Verhältnis zu dem Gemisch aus Monoalkinen in einem Mengenverhältnis von 1 : 1 bis 1000 : 1, vorzugsweise im Bereich von 10 : 1 verwendet. Die Katalysatoren können mit der Hilfsflüssigkeit vorgelegt und/oder während der Polymerisation kontinuierlich zugeführt werden.

Es ist aber auch möglich, die Monomeren in der Gasphase zu polymerisieren. Dabei empfiehlt sich, in das Polymerisationsgefäß einen Trägerstoff einzubringen, der bereits aus feinpulvrigem Polymerisat bestehen kann. Die Katalysatoren werden dann in Hilfsflüssigkeiten aufgeschlämmt eingebracht und die Lösungsmittelanteile nach erfolgter Polymerisation abgezogen.

Nach dem Verfahren werden Copolymerisate des Acetylens mit anderen Monoalkinen erhalten, die neben unlöslichen Anteilen auch lösliche Polymere enthalten. Die löslichen Anteile haben Molekulargewichte, die im Bereich zwischen 250 und 2000 meistens um 1000 liegen. Die Mol-Gewichte wurden dampfdruckosmometrisch nach einer Methode von Wilson, Bini und Hofstader, Anal. Chem. 33 (1961), 135−137 bestimmt. Die neuen Polymerisate sind als farbige Pigmente aufgrund ihrer Filmbildungstendenz als Farbüberzüge auf Metalle, Glas oder Kunststoffe von Interesse.

## Beispiele

### Herstellung des Katalysators

Zunächst wurden 4,57 g Aluminiumtriäthyl in 50 ml Toluol gemischt (40 mMol). Danach wurden 3,4 g Titantetraoxibutyl zugegeben (10 mMol). Diese Lösung wurde geschüttelt und etwa für die Dauer von 10 Minuten stehen gelassen, wobei die Lösung eine schwarzbraune Farbe annahm. Die jeweils benötigten Katalysatormengen wurden mit einer Spritze entnommen und den Reaktionsansätzen zugesetzt.

**0 016 448**

### Copolymerisation von Acetylen mit Monoalkinen

In einem 100-ml-Rundkolben wurden jeweils 40 ml Acetylen in 50 ml Toluol gelöst, so daß eine gesättigte Lösung erhalten wurde. Danach wurden unterschiedliche Mengen Monoalkine zugesetzt und nach dem Mischen jeweils 10 ml der oben angegebenen Katalysatorlösung zugesetzt.

Nach jeweils 24 Stunden wurden jeweils 20 ml methanolische Salzsäure zugegeben. Die schwarzen Niederschläge wurden abfiltriert und mit Methanol gewaschen. Die verbleibende Lösung wurde mehrfach mit Salzsäure geschüttelt. Das Lösungsmittel wurde unter Stickstoff entfernt und der Rückstand nach dem Wägen ermittelt und in verschiedene Lösungsmittel aufgenommen. Die Ergebnisse zeigt Tabelle 1.

Tabelle 1

| Nr. | Acetylen | Monomeres | Unlösliches Polymer | Lösliches Polymer |
|-----|----------|-----------|---------------------|-------------------|
| | mg | mg | mg | mg |
| 1 | 40 | 40 Propin | 43 | 26 |
| 2 | 40 | 20 Propin | 49 | 10 |
| 3 | 40 | 10 Propin | 56 | 3 |
| 4 | 40 | 40 Phenylacetylen | 34 | 37 |
| 5 | 40 | 30 Phenylacetylen | 42 | 28 |
| 6 | 40 | 20 Phenylacetylen | 48 | 10 |
| 7 | 40 | 10 Phenylacetylen | 52 | 7 |

### Copolymerisation zur Herstellung eines Filmes

In ein 500 ml-Gefäß wurde nach dem Evakuieren und Spülen mit Stickstoff jeweils 100 ml Toluol und 20 ml der oben angegebenen Katalysatorlösung zugegeben. Das Reaktionsgefäß wurde auf einer Temperatur von −50°C gehalten. Nach Erreichen dieser Temperatur wurden Gemische aus Acetylen und jeweils anderen Monoalkilen auf die Oberfläche der Flüssigkeit aufgebracht. Nachdem die Polymerisation beendet war wurde die Flüssigkeit aus dem Reaktionsgefäß abgesaugt. Die erhaltenen Filme von Polymerisat wurden gewaschen und getrocknet.

### Herstellung von Polymerisatpulver

Durch Einleiten von Gemischen aus Acetylen und anderen Monoalkinen wurden gesättigte Lösungen in Toluol hergestellt. Es wurden jeweils 30 ml der gesättigten Toluollösung mit 10 ml der Katalysatorlösung gemischt. Das nach 2 Stunden erhaltene Copolymerisat wurde abgesaugt und mit Toluol gespült. Das Polymere wurde pressend zwischen zwei Filterpapieren getrocknet. anschließend wurde die Masse für die Dauer von 24 Stunden mit Eisessig am Soxhlett eluiert. Es bilden sich feinteilige Produkte von dunkelgelber Farbe. Die erhaltenen Copolymerisate wurden bei 60°C im Trockenschrank getrocknet.

### Ausfällen der löslichen Oligomeren

Beim Aufgießen der erhaltenen Toluollösung in Methanol bildet sich an der Oberfläche ein goldglänzender, dünner Film, der in der Durchsicht rot erscheint. Die Filme erhielten Copolymerisate in Mengen von ca. 10 Gew.-%, bezogen auf die Ausgangsmonomeren. Die Copolymerisate hatten Molekulargewichte von ca. 1500.

### Copolymerisation von Acetylen mit unterschiedlichen Mengen Hexin

Es wurden jeweils unterschiedliche Mengen von Acetylen und Hexin im Toluol mit Hilfe des oben angegebenen Katalysators polymerisiert. Nach Beendigung der Polymerisation wurden die

3

Polymerisate mit methanolischer Salzsäure ausgefällt und die Anteile an unlöslichen Monomeren bestimmt. Die löslichen Oligomeren wurden aus der Toluollösung gewonnen und die Mengen ermittelt.

Die Ergebnisse sind in der Tabelle 2 zusammengefaßt.

Tabelle 2

Copolymerisation von Acetylen und Hexin (Temperatur −10°C; Lösung: 100 ml Toluol)
Menge an löslichen und unlöslichen Polymerisationsprodukten
$\lambda_{max}$ der unlöslichen Polymeren in Abhängigkeit von der Hexinkonzentration

| Nr. | Acetylen (mg) | Acetylen (mMol/l) | Hexin (mg) | Hexin (mMol/l) | Mol-% Hexin | Katalys. (mMol/l) | Unlösl. Polymer (mg) | $\lambda_{max}$ (nm) | Lösliches Produkt (mg) |
|---|---|---|---|---|---|---|---|---|---|
| 1 | 40 | 34 | 00 | 00 | 00 | 19,4 | 40 | 700 | 1 |
| 2 | 40 | 34 | 30 | 8,13 | 19,0 | 19,4 | 38 | 610 | 26 |
| 3 | 40 | 34 | 60 | 16,2 | 32,4 | 19,4 | 38 | 600 | 42 |
| 4 | 40 | 34 | 100 | 22,2 | 39,3 | 19,4 | 35 | 580 | 63 |
| 5 | 40 | 34 | 200 | 44,4 | 56,7 | 19,4 | 25 | 570 | 78 |
| 6 | 40 | 34 | 300 | 66,6 | 66,0 | 19,4 | 10 | 550 | 85 |
| 7 | 40 | 34 | 500 | 111 | 76,2 | 19,4 | 2 | 550 | 97 |
| 8 | 40 | 34 | 1000 | 222 | 86,7 | 19,4 | 00 | — | — |
| 9 | 40 | 34 | 3000 | 666 | 95,1 | 19,4 | 00 | — | — |

**Patentansprüche**

1. Verfahren zur Herstellung von Copolymerisaten des Acetylens durch katalytische Polymerisation von Acetylen mit Ziegler-Katalysatoren, dadurch gekennzeichnet, daß man Gemische aus Acetylen und anderen Monoalkinen polymerisiert.

2. Verfahren zur Herstellung von Copolymerisaten des Acetylens nach Anspruch 1, dadurch gekennzeichnet, daß man als Ziegler-Katalysatoren Gemische aus Titantetraoxialkylen und Aluminiumtrialkylen verwendet.

3. Verfahren zur Herstellung von Copolymerisaten des Acetylens nach Anspruch 1, dadurch gekennzeichnet, daß man das Gemisch aus Acetylen und anderen Monoalkinen in einer Hilfsflüssigkeit polymerisiert.

4. Verfahren zur Herstellung von Copolymerisaten des Acetylens nach Ansprüchen 1, 2 und 3, dadurch gekennzeichnet, daß man bei einer Temperatur zwischen $-70$ bis $+10°$C polymerisiert.

**Claims**

1. A process for the preparation of acetylene copolymers by catalytic polymerization of acetylene with Ziegler catalysts, characterized in that a mixture of acetylene and other monoalkynes is polymerized.

2. A process for the preparation of acetylene copolymers as claimed in claim 1, characterized in that the Ziegler catalyst used is a mixture of titanium tetraoxyalkyls and aluminium trialkyls.

3. A process for the preparation of acetylene copolymers as claimed in claim 1, characterized in that the mixture of acetylene and other monoalkynes is polymerized in an auxiliary fluid.

4. A process for the preparation of acetylene copolymers as claimed in claims 1, 2 and 3, characterized in that the polymerization is carried out at from $-70$ to $+10°$C.

**Revendications**

1. Procédé de préparation de copolymères d'acétylène par polymérisation catalytique d'acétylène avec des catalyseurs de Ziegler, caractérisé par le fait que l'on polymérise des mélanges d'acétylène et d'autres monoalcynes.

2. Procédé de préparation de copolymères d'acétylène selon la revendication 1, caractérisé par le fait qu'on utilise, comme catalyseurs de Ziegler des mélanges de titanotétraoxyalkylène et d'aluminiumtrialkylène.

3. Procédé de préparation de copolymères d'acétylène selon la revendication 1, caractérisé par le fait qu'on polymérise le mélange d'acétylène et autres monoalcynes dans un liquide auxiliaire.

4. Procédé de préparation de copolymères d'acétylène selon les revendications 1, 2 et 3, caractérisé par le fait qu'on polymérise à une température comprise entre $-70$ et $+10°$C.